# EUROPEAN PATENT SPECIFICATION

(11) **EP 2 482 231 B1**
(45) Date of publication and mention of the grant of the patent: **15.07.2015**
(21) Application number: 11158314.2
(22) Date of filing: 15.03.2011
(51) Int. Cl.: G06K 7/14, G06K 19/06, H03M 13/00

(54) **Method for encoding and decoding data on a matrix code symbol**
Verfahren zur Kodierung und Dekodierung von Daten in einem Matrixcodesymbol
Procédé de codage et de décodage de données dans un symbole de code de matrice

(30) Priority: 31.01.2011 US 201113018354
(43) Date of publication of application: 01.08.2012
(73) Proprietor: King Abdulaziz City for Science and Technology, Riyadh 11442 (SA)
(72) Inventor: Al-Omari, Hussein Khalid, 11442 Riyadh (SA); Khorsheed, Mohammad Sulaiman, 11442 Riyadh (SA); Al-Mutairy, Yassar A., 11442 Riyadh (SA)
(74) Representative: Goddar, Heinz J.

(56) References cited:
- WO-A1-97/26619
- WO-A1-2008/109234
- GB-A- 2 385 824

## Description

### AFIELD OF THE INTENTION

The invention generally relates to encoding and decoding data, and more specifically, to a method of encoding and decoding a table of data elements on a matrix code symbol.

### BACKGROUND OF THE INVENTION

Nowadays, matrix code symbols such as, barcodes are printed on various magazines, books, advertisement hoardings, and newspapers. These matrix code symbols provide additional information to users regarding magazines or books. Conventional barcodes such as, a one-dimensional barcode is configured as a single row of bars having varying thickness. The one-dimensional barcode is readable along a single axis. Upon reading the one-dimensional barcode, the row of bars may be decoded to represent data such as, textual information. However, the one-dimensional barcode has small storage capacity due to number of bars and spaces used by the barcode to represent the textual information such as, numerals.

In order to store more amount of data, two-dimensional barcodes may be used. The two-dimensional barcodes are also known as matrix code symbols. A two-dimensional barcode includes a grid or a matrix of black and white pixels, representing binary "0s" and "1s". Further, the amount of data stored by the two-dimensional barcode is more than the amount of data stored by the one-dimensional barcode. However, the two-dimensional barcode may consume a significant amount of space for representing the data.

WO97/26619A1 discloses means to encode a line of successive characters into a matrix of dots and to decode said dots back to the line of characters.

Therefore, there is a need for a method of encoding and decoding data on a matrix code symbol that reduces the amount of space required for representing the data on the matrix code symbol.

This need is provided by a computer implemented method of encoding data according to claim 1, by a computer implemented method of decoding data according to claim 4, by an encoder according to claim 7, and by a decoder according to claim 11.

### BRIEF DESCRIPTION OF THE FIGURES

The accompanying figures, where like reference numerals refer to identical or functionally similar elements throughout the separate views and which together with the detailed description below are incorporated in and form part of the specification, serve to further illustrate various embodiments and to explain various principles and advantages all in accordance with the present invention.
FIG. 1 illustrates an exemplary environment in which various embodiments of the invention may function.
FIG. 2 illustrates a matrix code symbol.
FIG. 3 illustrates a flowchart of a method of encoding data such as a table of data elements on a matrix code symbol in accordance with an embodiment of the invention.
FIG. 4 illustrates a flowchart of a method of converting the table of data elements into a string of characters in accordance with an embodiment of the invention.
FIG. 5 illustrates a flowchart of a method of decoding data from a matrix code symbol in accordance with an embodiment of the invention.
FIG. 6 illustrates a flowchart of a method of converting a string of characters into a table of data elements in accordance with an embodiment of the invention.
FIG. 7 illustrates a flow diagram of an encoder for encoding data on a matrix code symbol in accordance with an embodiment of the invention.
FIG. 8 illustrates a flow diagram of a decoder for decoding data from a matrix code symbol in accordance with an embodiment of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### DETAILED DESCRIPTION OF THE INVENTION

Before describing in detail embodiments that are in accordance with the present invention, it should be observed that the embodiments reside primarily in combinations of method steps and apparatus components related to a method of encoding and decoding data on a matrix code symbol. Accordingly, the apparatus components and method steps have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

Explanation provided in the detailed description section, includes procedures, steps, logic blocks, processing, and other symbolic representations of operations on data bits within a computer memory. A procedure, computer-executed step, logic block, process, etc., is here, and generally, conceived to be a self-consistent sequence of steps or instructions leading to a desired result. The steps described herein require physical manipulations of physical quantities. Usually, though not necessarily, these quantities take the form of electrical or magnetic signals capable of being stored, transferred, combined, compared, and otherwise manipulated in a computer system. Further for ease of description, these signals are referred as bits, values, elements, symbols, characters, terms, numbers, or the like.

It should be noted, however, that all of these and similar terms are to be associated with the appropriate physical quantities and are merely labels applied to these quantities for ease of description. Unless specifically stated otherwise as apparent from the following explanation, it is appreciated that throughout the present invention, explanation utilizing terms such as "receiving", "conversing", "encoding", "extracting", "creating", "adding", "retrieving", "detecting", "identifying", "generating", "decoding" or the like, refer to the actions and processes performed by a computer system, or similar electronic computing device, that manipulates and transforms data represented as physical (electronic) quantities within the computer system's registers and memories into other data similarly represented as physical quantities within the computer system memories or registers or other such information storage, transmission or display devices.

By way of example, and not limitation, computer-usable media may comprise computer storage media and communication media. Computer storage media includes volatile and nonvolatile, removable and non-removable media implemented in any method or technology for storage of information such as computer-readable instructions, data structures, program modules or other data.

Various embodiments of the invention provide a computer implemented method of encoding and decoding data on a matrix code symbol. A first aspect of the invention is to provide a computer implemented method of encoding data on the matrix code symbol. The method includes receiving the data in a form of a table of data elements. A data element of the table of data elements includes one or more characters. The one or more characters may include, but are not limited to, an alphabet, a numeral, a special character, and an alpha-numeric character. The table of data elements includes one or more rows of data elements. The table of data elements also includes one or more columns of data elements. The method further includes converting the table of data elements into a string of characters. Thereafter, the string of characters is encoded on the matrix code symbol.

A second aspect of the invention is to provide a computer implemented method of decoding data from a matrix code symbol. A string of characters is initially retrieved from the matrix code symbol. The string of characters is then converted into a table of data elements representing the data.

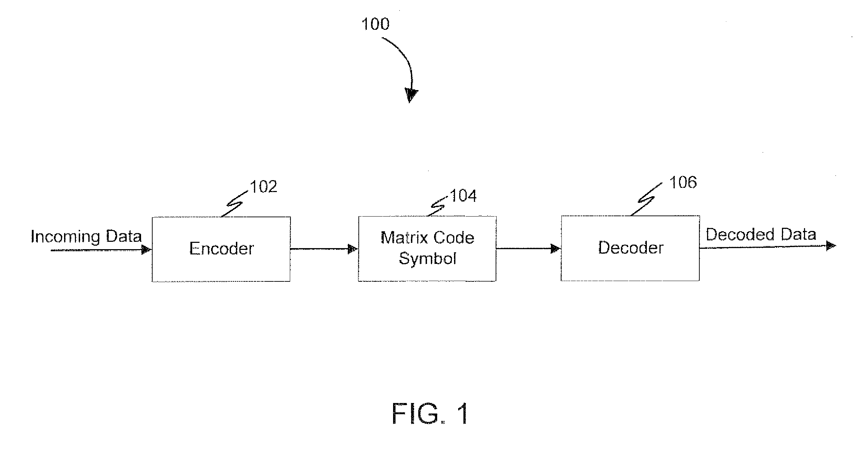

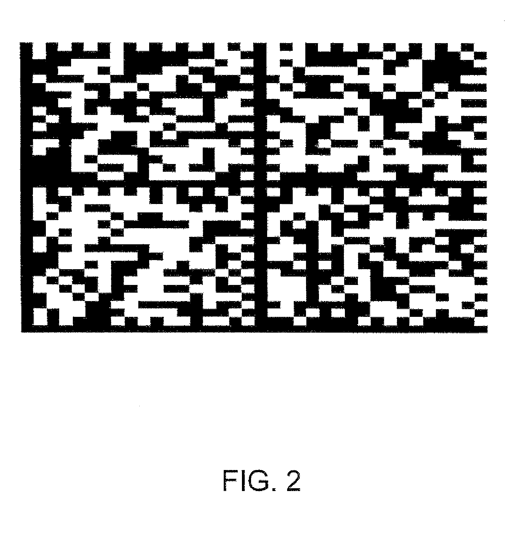

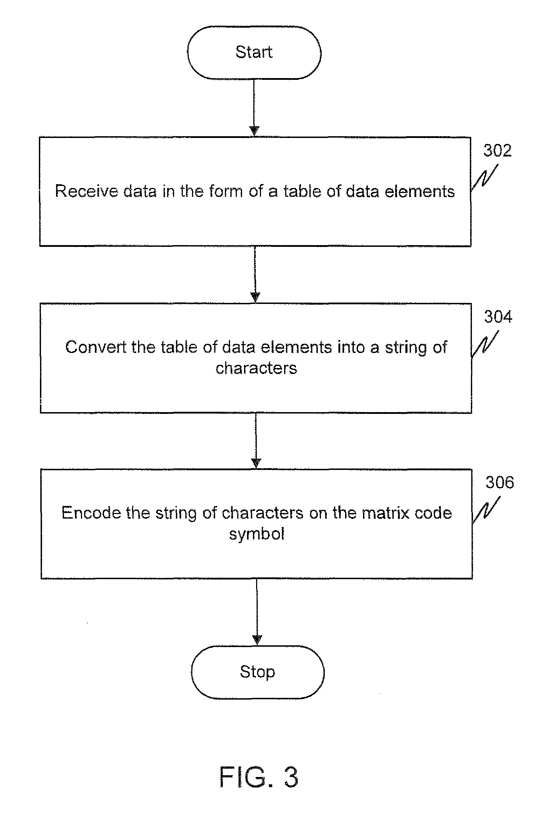

FIG. 1 illustrates an exemplary environment 100 in which various embodiments of the invention may function. Environment 100 includes an encoder 102, a matrix code symbol 104, and a decoder 106. Examples of encoder 102 may include, but are not limited to a device, a circuit, a software program, and an algorithm. Encoder 102 is configured to receive data and encode the data before storing it on matrix code symbol 104. A matrix code symbol may be a two dimensional barcode or a three dimensional barcode. In an embodiment, matrix code symbol 104 may be a two dimensional data matrix barcode that includes black cells and white cells arranged in either a square or a rectangular pattern as shown in Fig. 2. A black cell may represent bit "0" and a white cell may represent bit "1". Alternatively, the black cell may represent bit "1" and the white cell may represent bit "0". An amount of data that matrix code symbol 104 stores may depend on dimensions of matrix code symbol 104. The data stored in matrix code symbol 104 may be in the form of a table of data elements. The table of data elements may include one or more rows of data elements. Similarly, the table of data elements may include one or more columns of data elements. This is explained in detail in conjunction with FIG. 3.

In order to encode the table of data elements, encoder 102 may use one or more character encoding schemes. Examples of the one or more character encoding schemes include, but are not limited to, the American Standard Code for Information Interchange (ASCII), Unicode, Morse code, ECC200 ASCII encoding, and ISO-8859-1 scheme. Thus, encoder 102 encodes the table of data elements and stores it on matrix code symbol 104 using the one or more character encoding schemes. In order to store the encoded table of data elements on matrix code symbol 104, the encoded table of data elements may be transformed into a format that can be graphically encoded on matrix code symbol 104. For example, the encoded data is transformed to "0"s and "1"s to store it on matrix code symbol 104.

Decoder 106 is configured to retrieve the table of data elements by decoding the encoded table of data elements stored on matrix code symbol 104. Examples of decoder 106 may include, but is not limited to, a device, a circuit, a software program, a scanner, a data matrix reader, and an algorithm. Decoder 106 uses a character decoding scheme corresponding to the one or more character encoding schemes used by encoder 102 to retrieve the table of data elements.

FIG. 3 illustrates a flowchart of a computer implemented method of encoding data on a matrix code symbol in accordance with an embodiment of the invention. The matrix code symbol is a data matrix barcode that includes black and white cells arranged in either a square or a rectangular pattern. This is explained in conjunction with FIG. 1.

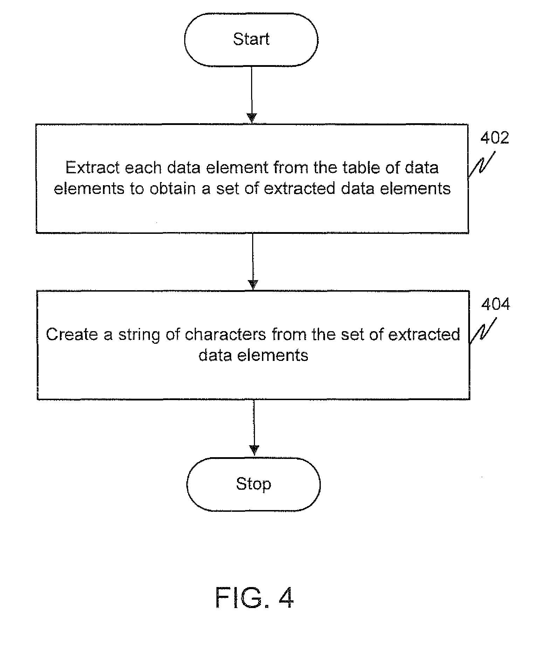

As shown in FIG. 3, the data is received in the form of a table of data elements at step 302. A data element of the table of data elements includes one or more characters. The one or more characters may include, but are not limited to, an alphabet, a numeral, a special character, and an alpha-numeric character. The one or more characters may be multi-lingual characters. The one or more characters may be associated with one or more languages including, but are not limited to, Arabic and English. Further, the table of data elements includes one or more rows of data elements. A row of data elements of the one or more rows of data elements includes one or more data elements. The table of data elements also includes one or more columns of data elements. Similarly, a column of data elements of the one or more columns of data elements includes one or more data elements. Upon receiving the table of data elements, the table of data elements is converted into a string of characters at step 304. The method of converting the table of data elements into the string of characters is explained in detail in conjunction with FIG. 4. Thereafter, at step 306, the string of characters is encoded on the matrix code symbol. The string of characters may be encoded using one or more character encoding schemes. Examples of the one or more character encoding schemes may include, but are not limited to, the American Standard Code for Information Interchange (ASCII), Unicode, Morse code, ECC200 ASCII encoding, and ISO-8859-1 scheme.

FIG. 4 illustrates a flowchart of a computer implemented method of converting a table of data elements into a string of characters in accordance with an embodiment of the invention. As shown in FIG. 4, each data element is extracted from the table of data elements to obtain a set of extracted data elements at step 402. Consider an example of a table of data elements as shown in Table 1.

**Table 1**

| **Day/Time** | **8-10** | **10-12** |
|---|---|---|
| **Saturday** | Study | Lab |
| **Sunday** | Study | Lab |

In an embodiment, each data element may be extracted from the table of data elements on a row-by-row basis. For example, each data element is extracted from Table 1 on a row-by-row basis in the following order:
Day/Time, 8-10, 10-12, Saturday, Study, Lab, Sunday, Study, Lab.

Alternatively, each data element may be extracted from the table of data elements on a column-by-column basis. For example, each data element is extracted from Table 1 on a column-by-column basis in the following order:
Day/Time, Saturday, Sunday, 8-10, Study, Study, 10-12, Lab, Lab.

Once each data element is extracted from the table of data elements, a string of characters is created from the set of extracted data elements at step 404. The string of characters is created by adding an identifier associated with each extracted data element to the set of extracted data elements. The identifier represents a location of each data element in the table of data elements. For example, an identifier "11" is added to an extracted data element "Day/Time" which may be represented as "11 Daytime". Identifier "11" indicates that data element "Day/Time" is extracted from first row and first column of Table 1, Similarly, identifiers "12", "13", "21", "22", "23", "31", "32", and "33" are added to extracted data elements "8-10", "10-12", "Saturday", "Study", "Lab", "Sunday", "Study", and "Lab" respectively.

While creating the string of characters, one or more special characters may also be added to each data element of the set of extracted data elements. The one or more special characters may include, but are not limited to, "\", "*", "^", and "&". It will be evident to a person skilled in the art that any other special characters may be added while creating the string of characters. The one or more special characters are added to each extracted data element for indicating the beginning of each extracted data element. In an embodiment, the one or more special characters may be added at the beginning of each extracted data element. In this case, the one or more special characters may act as a delimiter for each extracted data element. For example, two special characters "\\" are added at the beginning of extracted data elements "Day/Time", "8-10", "10-12", "Saturday", "Study", "Lab", "Sunday", "Study", and "Lab". In addition, the one or more special characters may be added at the end of the first extracted data element. The addition of the one or more special characters at the end of the first extracted data element indicates a beginning of a table of data elements. For example, a special character "^" is added at the end of the last extracted data element "Lab". By adding identifiers and one or more special characters to each extracted data element of Table 1, a string of characters is created in the following form:
\\11 Day/Time \\12 8-10 \\13 10-12 \\21 Saturday \\22 Study \\23 Lab \\31 Sunday \\32 Study \\33 Lab ^

Alternatively, the one or more special characters such as, a special character "^" may be added at the beginning of the last extracted data element. The addition of the one or more special characters at the beginning of the last extracted data element indicates the end of a table of data elements. In a scenario, the one or more special characters may be added both at the beginning of the first extracted data element and at the end of the last extracted data element.

In another embodiment, an identifier "R" is added to an extracted data element "Day/Time" which is represented as "R Day/Time". Identifier "R" indicates that data element "Day/Time" is extracted from first row of Table 1. Further, an identifier "C" may be added to an extracted data element "8-10" which is represented as "C 8-10". Identifier "C" indicates that data element "8-10" is extracted from a second column of Table 1. Further, a special character "^" may also be added at the beginning of each extracted data element of Table 1. In this case, special character ""' may act as a delimiter for each extracted data element of Table 1. In another embodiment, a combination of an identifier and a special character such as "^" may be added at the end of the last extracted data element "Lab" which indicates the end of table of data elements. By adding identifiers and a special character to each extracted data element of Table 1, a string of characters is created in the following form:
^R Day/Time ^C 8-10 ^C 10-12 ^R Saturday ^C Study ^C Lab ^R Sunday ^C Study ^C Lab ^E

In an embodiment, a table of data elements in which the data elements may be multi-lingual. In such a case, one or more rows of the table of data elements may be in Arabic and one or more columns of the data elements may be in English. Further, each data element is extracted from the table of data elements to obtain a set of extracted data elements. Once data elements are extracted, a string of characters is created from the set of extracted data elements. The string of characters is created by adding an identifier associated with each extracted data element to the set of extracted data elements. While creating the string of characters, one or more special characters are also added to each data element of the set of extracted data elements.

Upon creating the string of characters, the string of characters is encoded on the matrix code symbol as explained in conjunction with FIG. 1. The conversion of the table of data elements into a string of characters and addition of one or more special characters in the string of characters facilitates in increasing the capacity of storing data on the matrix code symbol.

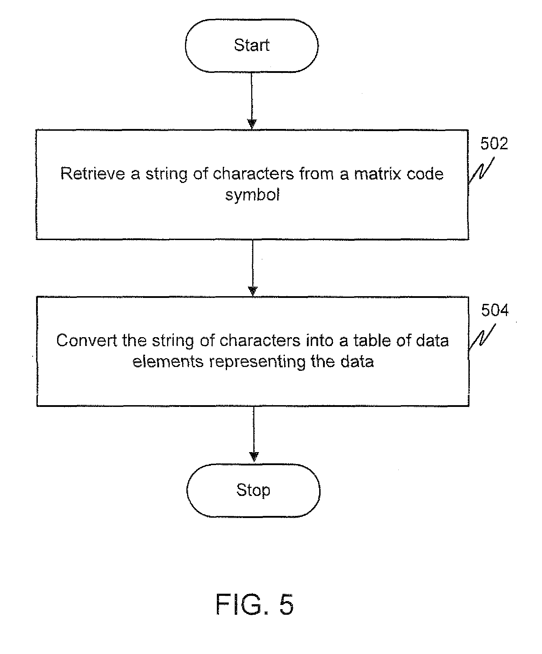

The data encoded on a matrix code symbol needs to be retrieved, so the data is decoded from the matrix code symbol. FIG. 5 illustrates a flowchart of a computer implemented method of decoding data from a matrix code symbol in accordance with an embodiment of the invention. The data encoded on the matrix code symbol may be a table of data elements. A data element of the table of data elements includes one or more characters. The table of data elements and the one or more characters are explained in detail in conjunction with FIG. 3.

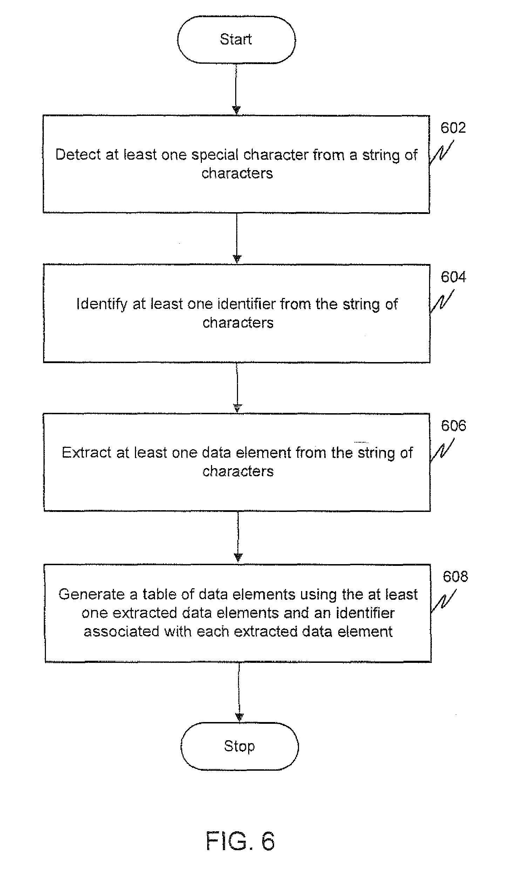

As shown in FIG. 5, a string of characters is retrieved from the matrix code symbol at step 502. The string of characters is explained in detail in conjunction with FIG. 3. In order to retrieve the string of characters from the matrix code symbol, the matrix code symbol may be scanned by reading black and white cells from the matrix code symbol. Upon retrieving the string of characters, the string of characters is converted into a table of data elements at step 504. The method of converting the string of characters into the table of data elements is explained in detail in conjunction with FIG. 6. The table of data elements represents the data decoded from the matrix code symbol.

FIG. 6 illustrates a flowchart of a computer implemented method of converting a string of characters into a table of data elements in accordance with an embodiment of the invention. As shown in FIG. 6, one or more special characters are detected from the string of characters at step 602. The one or more special characters may include, but are not limited to, "\", "*", "^", and "&". It will be evident to a person skilled in the art that any other special characters may be detected from the string of characters. In an embodiment, the one or more special characters may be detected at the beginning of each data element of the string of characters. A special character of the one or more special characters indicates the beginning of a corresponding data element in the string of characters. Consider an example in which a string of characters is of the following form: \\11 Day/Time \\12 8-10 \\13 10-12 \\21 Saturday \\22 Study \\23 Lab \\31 Sunday \\32 Study \\33 Lab ^

In this case, two special characters "\\" are detected at the beginning of data element "Day/Time". The one or more special characters detected at the beginning of the string of characters indicate a beginning of the string of characters. Alternatively, the one or more special characters may be detected at the end of the string of characters. In this case, the one or more special characters indicate the end of the string of characters. For example, a special character "^" detected at the end of the string of characters shown above, indicates an end of the table of data elements corresponding to the string of characters. In an embodiment, the one or more special characters may be detected both at the beginning of the string of characters and at the end of the string of characters.

Further, one or more identifiers are identified from the string of characters at step 604. An identifier of the one or more identifiers indicates a location of a corresponding data element in the table of data elements. For example, an identifier "11" is identified from the string of characters which indicates a location of data element "Day/Time". The identifier "11" indicates a first row and a first column of the table of data elements.

Once the one or more identifiers are identified, one or more data elements are extracted from the string of characters at step 606. For example, data elements extracted from the string of characters are "Day/Time", "8-10", "10-12", "Saturday", "Study", "Lab", "Sunday,", "Sturdy", and "Lab". Thereafter, at step 608, the table of data elements is generated using the one or more extracted data elements and identifiers associated with each extracted data element. For example, a table of data elements is generated as shown in Table 2.

**Table 2**

| **Day/Time** | **8-10** | **10-12** |
|---|---|---|
| **Saturday** | Study | Lab |
| **Sunday** | Study | Lab |

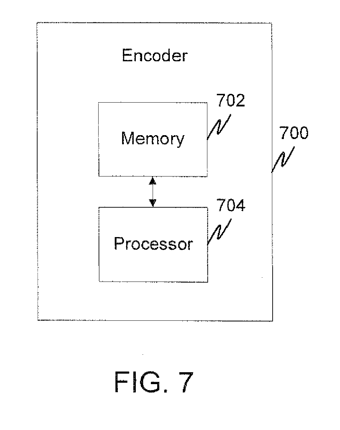

FIG. 7 illustrates a flow diagram of an encoder 700 for encoding data on a matrix code symbol in accordance with an embodiment of the invention. The matrix code symbol is a data matrix barcode that includes black and white cells arranged in either a square or a rectangular pattern. This is already explained in conjunction with FIG. 1. The data may be received in the form of a table of data elements. A data element of the table of data elements includes one or more characters. The one or more characters may include, but are not limited to, an alphabet, a numeral, a special character, and an alpha-numeric character. The one or more characters may be multi-lingual characters. The one or more characters may be associated with one or more languages including, but are not limited to, Arabic and English. Further, the table of data elements includes one or more rows of data elements. A row of data elements of the one or more rows of data elements includes one or more data elements. The table of data elements also includes one or more columns of data elements. Similarly, a column of data elements of the one or more columns of data elements includes one or more data elements. Encoder 700 includes a memory 702, and a processor 704 coupled to memory 702. The data to be encoded on the matrix code symbol. In an embodiment, the data is encoded on the matrix code symbol received through an interface (not shown in FIG. 7) associated with encoder 700.

After receiving the table of data elements to be encoded, the table of data elements may be saved in memory 702. The table of data elements is retrieved from memory 702 by processor 704. Further, processor 704 converts the table of data elements into a string of characters. In order to convert the table of data elements into the string of characters, processor 704 extracts each data element of the table of data elements to obtain a set of extracted data elements. In an embodiment, each data element may be extracted from the table of data elements on a row-by-row basis. In another embodiment, each data element may be extracted from the table of data elements on a column-by-column basis. Upon obtaining the set of extracted data elements, processor 704 adds an identifier associated with each extracted data element to the set of extracted data elements. The identifier associated with each data element represents a location of each data element in the table of data elements. This is explained in conjunction with FIG. 3.

Further, processor 704 adds one or more special characters associated with each extracted data element to the set of extracted data elements. The one or more special characters may include, but are not limited to, "\", "*", "^", and "&". It will be evident to a person skilled in the art that any other special characters may be added while creating the string of characters. The one or more special characters are added to each data element for indicating the beginning of the each extracted data element. The one or more special characters may act as a delimiter for each extracted data element. In an embodiment, one or more special characters may be added at the beginning of each extracted data element. The one or more special characters thus added indicate a beginning of a table of data elements. Alternatively, the one or more special characters may be added at the end of the last extracted data element. The one or more special characters added in this case indicate the end of a table of data elements. In an alternate embodiment, the one or more special characters may be added both at the beginning of the first extracted data element and at the end of the last extracted data element.

Upon adding identifiers associated with each extracted data element of the set of extracted data elements and adding the one or more special characters to the set of extracted data elements, processor 704 creates a string of characters. The string of characters created by processor 704 is saved in memory 702. Tiaereafter, processor 704 encodes the string of characters on the matrix code symbol. Processor 704 may use a character encoding scheme for encoding the string of characters on the matrix code symbol. Examples of the one or more character encoding schemes may include, but are not limited to, the American Standard Code for Information Interchange (ASCII), Unicode, Morse code, ECC200 ASCII encoding, and ISO-8859-1 scheme.

In an embodiment, a table of data elements is encoded into a string of characters using an encoder. Upon encoding the table of data elements into the string of characters, encoder 700 encodes the string of characters on the matrix code symbol.

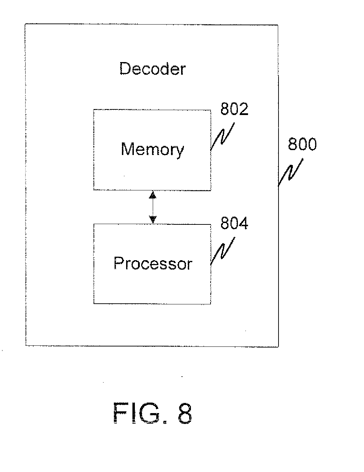

FIG. 8 illustrates a flow diagram of a decoder 800 for decoding data from a matrix code symbol in accordance with an embodiment of the invention. Decoder 800 includes a memory 802, and a processor 804 coupled to memory 802. Processor 804 retrieves data from the matrix code symbol. The data retrieved from the matrix code symbol may be a string of characters. The string of characters retrieved from the matrix code symbol may be stored in memory 802. Further, processor 804 detects one or more special characters from the string of characters. A special character of the one or more special characters indicates the beginning of a corresponding data element in the string of characters. A data element of the table of data elements includes one or more characters. The one or more characters may include, but are not limited to, an alphabet, a numeral, a special character, and an alpha-numeric character. The table of data elements and data elements are explained in detail in conjunction with FIG. 3 and FIG. 7.

In an embodiment, the one or more special characters may be detected at the beginning of each data element of the string of characters. In addition, the one or more special characters may be detected at the beginning of the string of characters. The detected one or more special characters indicate a beginning of the string of characters. Alternatively, the one or more special characters may be detected at the end of the string of characters. The one or more special characters thus detected indicate the end of the string of characters. In a scenario, the one or more special characters may be detected both at the beginning of the string of characters and at the end of the string of characters.

Upon detecting the one or more special characters, processor 804 identifies one or more identifiers from the string of characters. An identifier of the one or more identifiers indicates a location of a corresponding data element in the table of data elements. Further, processor 804 extracts one or more data elements from the string of characters. Thereafter, processor 804 generates a table of data elements using the one or more data elements extracted from the string of characters and identifiers associated with each data element of the one or more data elements. The table of data elements generated by processor 804 is stored in memory 802.

In an embodiment, a string of characters is decoded from a matrix code symbol using a decoder 800. Upon decoding the string of characters from the matrix code symbol, decoder 800 decodes a table of data elements from the string of characters.

Various embodiments of the method described herein facilitate in encoding and decoding data represented as a table of data elements on a matrix code symbol. The method includes converting the table of data elements into a string of characters and encoding the string of characters on the matrix code symbol. The string of characters includes one or more special characters as delimiters. Storing of the data in the form of the string of characters in the matrix code symbol facilitates in increasing capacity of storing data on the matrix code symbol.

Those skilled in the art will realize that the above recognized advantages and other advantages described herein are merely exemplary and are not meant to be a complete rendering of all of the advantages of the various embodiments of the present invention.

In the foregoing specification, specific embodiments of the present invention have been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of the present invention. The benefits, advantages, solutions to problems, and any element(s) that may cause any benefit, advantage, or solution to occur or become more pronounced are not to be construed as critical, required, or essential features or elements of any or all of the claims. The present invention is defined solely by the appended claims including any amendments made during the pendency of this application and all equivalents of those claims as issued.

## Claims

1. A computer implemented method of encoding data into a matrix code symbol (104), the computer implemented method comprising:
receiving the data in the form of a table of data elements, wherein a data element of the table of data elements comprises at least one character, the table of data elements comprises at least one row of data elements, wherein a row of data elements of the at least one row of data elements comprises at least one data element; and at least one column of data elements, wherein a column of data elements of the at least one column of data elements comprises at least one data element;
converting the table of data elements into a string of characters, wherein converting the table of data elements comprises extracting each data element from the table of data elements to obtain a set of extracted data elements; and creating the string of characters from the set of extracted data elements, wherein creating the string comprises adding an identifier associated with each extracted data element to the set of extracted data elements, wherein the identifier represents a row and column location of each data element in the table of data elements; and
encoding the string of characters into the matrix code symbol (104), in particular wherein the at least one character is at least one of an alphabet, a numeral, a special character, and an alpha-numeric character.

2. The computer implemented method of claim 1, wherein each data element is extracted from the table of data elements on a row-by-row basis or on a column-by-column basis.

3. The computer implemented method of any one of the preceding claims, wherein creating the string of characters further comprises:
adding at least one special character associated with each extracted data element of the set of extracted data elements to the set of extracted data elements thereby creating the string of characters, wherein the at least one special character indicates the beginning of each extracted data element, in particular wherein the at least one special character is added at the beginning of each extracted data element or at the end of the last extracted data element.

4. A computer implemented method of decoding data from a matrix code symbol (104), the computer implemented method comprising:
retrieving a string of characters from the matrix code symbol (104); and
converting the string of characters into a table of data elements representing the data, thereby decoding the data from the matrix code symbol (104), wherein the string of characters comprises at least one data element of the table of data elements, at least one special character associated with each data element of the at least one data element, and an identifier associated with each data element, wherein converting the string comprises identifying at least one identifier from the string of characters, wherein the at least one identifier indicates a row and column location of a corresponding data element in the table of data elements, wherein a data element of the table of data elements comprises at least one character, the table of data elements comprises at least one row of data elements, wherein a row of data elements of the at least one row of data elements comprises at least one data element; and at least one column of data elements, wherein a column of data elements of the at least one column of data elements comprises at least one data element.

5. The computer implemented method of claim 4, wherein the at least one character is at least one of an alphabet, a numeral, a special character, and an alpha-numeric character.

6. The computer implemented method of claim 4 or 5, wherein converting the string of characters into the table of data elements further comprises:
detecting the at least one special character from the string of characters, wherein a special character of the at least one special character indicates the beginning of a corresponding data element in the string of characters;
extracting at least one data element from the string of characters; and
generating the table of data elements using the at least one extracted data elements and an identifier associated with each extracted data element, in particular wherein the at least one special character is detected at the beginning of the corresponding data element or at the end of the string of characters.

7. An encoder (102) for encoding data into a matrix code symbol (104), the encoder (102) comprising:
a memory (702) for storing a table of data elements, wherein a data element of the table of data elements comprises at least one character, the table of data elements comprises at least one row of data elements, wherein a row of data elements of the at least one row of data elements comprises at least one data element; and at least one column of data elements, wherein a column of data elements of the at least one column of data elements comprises at least one data element; and
a processor (704) coupled to the memory, wherein the processor (704) is configured to: convert the table of data elements into a string of characters; and encode the string of characters into the matrix code symbol (104), to extract each data element from the table of data elements to obtain a set of extracted data elements, to add an identifier associated with each extracted data element in the set of extracted data elements to the set of extracted data elements, wherein the identifier corresponds to a row and column location of each data element in the table of data elements; and to create the string of characters from the set of extracted data elements.

8. The encoder (107) of claim 7, wherein the processor (704) is further configured to:
extract each data element from the table of data elements on a row-by-row basis or on a column-by-column basis.

9. The encoder (102) of claim 8, wherein the processor (702) is further configured to:
add at least one special character associated with each extracted data element in the set of extracted data elements to the set of extracted data elements thereby creating the string of characters, wherein the at least one special character indicates the beginning of each extracted data element, in particular wherein the at least one special character is added at the beginning of each extracted data element or at the end of the last extracted data element.

10. The encoder (102) of any one of the claims 7 to 9, wherein the string of characters comprises each data element of the table of data elements, at least one special character associated with each data element, and an identifier associated with each data element.

11. A decoder (106) for decoding data from a matrix code symbol (104), the decoder (106) comprising: a processor (804) configured to:
retrieve a string of characters from the matrix code symbol (104); and
convert the string of characters into a table of data elements representing the data, wherein the string of characters comprises at least one data element of the table of data elements, at least one special character associated with each data, wherein converting the string comprises to identify at least one identifier from the string of characters, wherein an identifier of the at least one identifier indicates a row and column location of a corresponding data element in the table of data elements, wherein a data element of the table of data elements comprises at least one character, the table of data elements comprises at least one row of data elements, wherein a row of data elements of the at least one row of data elements comprises at least one data element; and at least one column of data elements, wherein a column of data elements of the at least one column of data elements comprises at least one data element; and
store the string of characters and the table of data elements.

12. The decoder (106) of claim 11, wherein the processor (804) is further configured to:
detect the at least one special character from the string of characters, wherein a special character of the at least one special character indicates the beginning of a corresponding data element in the string of characters;
extract at least one data element from the string of characters; and
generate the table of data elements using the at least one extracted data elements and an identifier associated with each extracted data element, in particular wherein the at least one special character is detected at the beginning of the corresponding data element or at the end of the string of characters.

## Patentansprüche

1. Computerimplementiertes Verfahren zum Codieren von Daten zu einem Matrixcodesymbol (104), wobei das computerimplementierte Verfahren Folgendes umfasst:
Empfangen der Daten in Form einer Tabelle von Datenelementen, wobei ein Datenelement der Tabelle von Datenelementen wenigstens ein Zeichen umfasst, wobei die Tabelle von Datenelementen wenigstens eine Zeile von Datenelementen, wobei eine Zeile von Datenelementen der wenigstens einen Zeile von Datenelementen wenigstens ein Datenelement umfasst; und wenigstens eine Spalte von Datenelementen, wobei eine Spalte von Datenelementen der wenigstens einen Spalte von Datenelementen wenigstens ein Datenelement umfasst, umfasst;
Umsetzen der Tabelle von Datenelementen zu einer Zeichenkette, wobei das Umsetzen der Tabelle von Datenelementen das Entnehmen jedes Datenelements aus der Tabelle von Datenelementen, um eine Menge entnommener Datenelemente zu erhalten; und das Erzeugen der Zeichenkette aus der Menge entnommener Datenelemente umfasst, wobei das Erzeugen der Kette das Hinzufügen einer Kennung, die jedem entnommenen Datenelement zugeordnet ist, zu der Menge entnommener Datenelemente umfasst, wobei die Kennung einen Zeilen- und Spaltenort jedes Datenelements in der Tabelle von Datenelementen repräsentiert; und
Codieren der Zeichenkette zu dem Matrixcodesymbol (104), wobei das wenigstens eine Zeichen insbesondere ein Alphabetzeichen und/oder ein Zahlzeichen und/oder ein Sonderzeichen und/oder ein alphanumerisches Zeichen ist.

2. Computerimplementiertes Verfahren nach Anspruch 1, wobei jedes Datenelement auf Zeilenbasis oder auf Spaltenbasis aus der Tabelle von Datenelementen entnommen wird.

3. Computerimplementiertes Verfahren nach einem der vorhergehenden Ansprüche, wobei das Erzeugen der Zeichenkette ferner Folgendes umfasst:
Hinzufügen wenigstens eines Sonderzeichens, das jedem entnommenen Datenelement der Menge entnommener Datenelemente zugeordnet ist, zu der Menge entnommener Datenelemente und dadurch Erzeugen der Zeichenkette, wobei das wenigstens eine Sonderzeichen den Anfang jedes entnommenen Datenelements angibt, wobei das wenigstens eine Sonderzeichen insbesondere am Anfang jedes entnommenen Datenelements oder am Ende des letzten entnommenen Datenelements hinzugefügt wird.

4. Computerimplementiertes Verfahren zum Decodieren von Daten aus einem Matrixcodesymbol (104), wobei das computerimplementierte Verfahren Folgendes umfasst:
Auslesen einer Zeichenkette aus dem Matrixcodesymbol (104); und
Umsetzen der Zeichenkette in eine Tabelle von Datenelementen, die die Daten repräsentieren, und dadurch Decodieren der Daten aus dem Matrixcodesymbol (104), wobei die Zeichenkette wenigstens ein Datenelement aus der Tabelle von Datenelementen umfasst, wobei jedem Datenelement des wenigstens einen Datenelements wenigstens ein Sonderzeichen zugeordnet ist und wobei jedem Datenelement eine Kennung zugeordnet ist, wobei das Umsetzen der Kette das Identifizieren wenigstens einer Kennung aus der Zeichenkette umfasst, wobei die wenigstens eine Kennung einen Zeilen- und Spaltenort eines entsprechenden Datenelements in der Tabelle von Datenelementen angibt, wobei ein Datenelement der Tabelle von Datenelementen wenigstens ein Zeichen umfasst, wobei die Tabelle von Datenelementen wenigstens eine Zeile von Datenelementen, wobei eine Zeile von Datenelementen der wenigstens einen Zeile von Datenelementen wenigstens ein Datenelement umfasst; und wenigstens eine Spalte von Datenelementen, wobei eine Spalte von Datenelementen der wenigstens einen Spalte von Datenelementen wenigstens ein Datenelement umfasst, umfasst.

5. Computerimplementiertes Verfahren nach Anspruch 4, wobei das wenigstens eine Zeichen ein Alphabetzeichen und/oder ein Zahlzeichen und/oder ein Sonderzeichen und/oder ein alphanumerisches Zeichen ist.

6. Computerimplementiertes Verfahren nach Anspruch 4 oder 5, wobei das Umsetzen der Zeichenkette in die Tabelle von Datenelementen ferner Folgendes umfasst:
Detektieren des wenigstens einen Sonderzeichens aus der Zeichenkette, wobei ein Sonderzeichen des wenigstens einen Sonderzeichens den Anfang eines entsprechenden Datenelements in der Zeichenkette angibt;
Entnehmen wenigstens eines Datenelements aus der Zeichenkette; und
Erzeugen der Tabelle von Datenelementen unter Verwendung des wenigstens einen entnommenen Datenelements und einer Kennung, die jedem entnommenen Datenelement zugeordnet ist, wobei das wenigstens eine Sonderzeichen insbesondere am Anfang des entsprechenden Datenelements oder am Ende der Zeichenkette detektiert wird.

7. Codierer (102) zum Codieren von Daten zu einem Matrixcodesymbol (104), wobei der Codierer (102) Folgendes umfasst:
einen Speicher (702) zum Speichern einer Tabelle von Datenelementen, wobei ein Datenelement der Tabelle von Datenelementen wenigstens ein Zeichen umfasst, wobei die Tabelle von Datenelementen wenigstens eine Zeile von Datenelementen, wobei eine Zeile von Datenelementen der wenigstens einen Zeile von Datenelementen wenigstens ein Datenelement umfasst; und wenigstens eine Spalte von Datenelementen, wobei eine Spalte von Datenelementen der wenigstens einen Spalte von Datenelementen wenigstens ein Datenelement umfasst, umfasst; und
einen Prozessor (704), der mit dem Speicher gekoppelt ist, wobei der Prozessor (704) zu Folgendem konfiguriert ist: Umsetzen der Tabelle von Datenelementen zu einer Zeichenkette; und Codieren der Zeichenkette zu dem Matrixsymbol (104), Entnehmen jedes Datenelements aus der Tabelle von Datenelementen, um eine Menge entnommener Datenelemente zu erhalten, Hinzufügen einer Kennung, die jedem entnommenen Datenelement in der Menge entnommener Datenelemente zugeordnet ist, zu der Menge entnommener Datenelemente, wobei die Kennung einem Zeilen- und Spaltenort jedes Datenelements in der Tabelle von Datenelementen entspricht; und Erzeugen der Zeichenkette aus der Menge entnommener Datenelemente.

8. Codierer (102) nach Anspruch 7, wobei der Prozessor (704) ferner zu Folgendem konfiguriert ist:
Entnehmen jedes Datenelements auf Zeilenbasis oder auf Spaltenbasis aus der Tabelle von Datenelementen.

9. Codierer (102) nach Anspruch 8, wobei der Prozessor (704) ferner zu Folgendem konfiguriert ist:
Hinzufügen wenigstens eines Sonderzeichens, das jedem entnommenen Datenelement in der Menge entnommener Datenelemente zugeordnet ist, zu der Menge entnommener Datenelemente und dadurch Erzeugen der Zeichenkette, wobei das wenigstens eine Sonderzeichen den Anfang jedes entnommenen Datenelements angibt, wobei das wenigstens eine Sonderzeichen insbesondere am Anfang jedes entnommenen Datenelements oder am Ende des letzten entnommenen Datenelements hinzugefügt wird.

10. Codierer (102) nach einem der Ansprüche 7 bis 9, wobei die Zeichenkette jedes Datenelement der Tabelle von Datenelementen umfasst, wobei jedem Datenelement wenigstens ein Sonderzeichen zugeordnet ist und wobei jedem Datenelement eine Kennung zugeordnet ist.

11. Decodierer (106) zum Decodieren von Daten aus einem Matrixcodesymbol (104), wobei der Decodierer (106) Folgendes umfasst: einen Prozessor (804), der zu Folgendem konfiguriert ist:
Empfangen einer Zeichenkette aus dem Matrixcodesymbol (104); und
Umsetzen der Zeichenkette in eine Tabelle von Datenelementen, die die Daten repräsentieren, wobei die Zeichenkette wenigstens ein Datenelement der Tabelle von Datenelementen umfasst, wobei jeder Dateneinheit wenigstens ein Sonderzeichen zugeordnet ist, wobei das Umsetzen der Kette das Identifizieren wenigstens einer Kennung aus der Zeichenkette umfasst, wobei eine Kennung der wenigstens einen Kennung einen Zeilen- und Spaltenort eines entsprechenden Datenelements in der Tabelle von Datenelementen angibt, wobei ein Datenelement der Tabelle von Datenelementen wenigstens ein Zeichen umfasst, wobei die Tabelle von Datenelementen wenigstens eine Zeile von Datenelementen, wobei eine Zeile von Datenelementen der wenigstens einen Zeile von Datenelementen wenigstens ein Datenelement umfasst; und wenigstens eine Spalte von Datenelementen, wobei eine Spalte von Datenelementen der wenigstens einen Spalte von Datenelementen wenigstens ein Datenelement umfasst, umfasst; und
Speichern der Zeichenkette und der Tabelle von Datenelementen.

12. Decodierer (106) nach Anspruch 11, wobei der Prozessor (804) ferner zu Folgendem konfiguriert ist:
Detektieren des wenigstens einen Sonderzeichens aus der Zeichenkette, wobei ein Sonderzeichen des wenigstens einen Sonderzeichens den Anfang eines entsprechenden Datenelements in der Zeichenkette angibt;
Entnehmen wenigstens eines Datenelements aus der Zeichenkette; und
Erzeugen der Tabelle von Datenelementen unter Verwendung des wenigstens einen entnommenen Datenelements und einer Kennung, die jedem entnommenen Datenelement zugeordnet ist, wobei das wenigstens eine Sonderzeichen insbesondere am Anfang des entsprechenden Datenelements oder am Ende der Zeichenkette detektiert wird.

## Revendications

1. Procédé informatisé de codage de données dans un symbole (104) de code à matrice, le procédé informatisé comportant les étapes consistant à :
recevoir les données sous la forme d'une table d'éléments de données, un élément de données de la table d'éléments de données comportant au moins un caractère, la table d'éléments de données comportant au moins une ligne d'éléments de données, une ligne d'éléments de données parmi la ou les lignes d'éléments de données comportant au moins un élément de données ; et au moins une colonne d'éléments de données, une colonne d'éléments de données parmi la ou les colonnes d'éléments de données comportant au moins un élément de données ;
convertir la table d'éléments de données en une chaîne de caractères, la conversion de la table d'éléments de données comportant les étapes consistant à extraire chaque élément de données de la table d'éléments de données pour obtenir un ensemble d'éléments de données extraits ; et à créer la chaîne de caractères à partir de l'ensemble d'éléments de données extraits, la création de la chaîne comportant l'étape consistant à ajouter à l'ensemble d'éléments de données extraits un identifiant associé à chaque élément de données extrait, l'identifiant représentant une position de ligne et de colonne de chaque élément de données dans la table d'éléments de données ; et
coder la chaîne de caractères dans le symbole (104) de code à matrice, le ou les caractères étant, en particulier, au moins un caractère parmi un caractère alphabétique, un chiffre, un caractère spécial et un caractère alphanumérique.

2. Procédé informatisé selon la revendication 1, chaque élément de données étant extrait de la table d'éléments de données ligne par ligne ou colonne par colonne.

3. Procédé informatisé selon l'une quelconque des revendications précédentes, la création de la chaîne de caractères comportant en outre l'étape consistant à :
ajouter à l'ensemble d'éléments de données extraits au moins un caractère spécial associé à chaque élément de données extrait de l'ensemble d'éléments de données extraits, créant ainsi la chaîne de caractères, le ou les caractères spéciaux indiquant le début de chaque élément de données extrait, le ou les caractères spéciaux étant en particulier ajoutés au début de chaque élément de données extrait ou à la fin du dernier élément de données extrait.

4. Procédé informatisé de décodage de données à partir d'un symbole (104) de code à matrice, le procédé informatisé comportant les étapes consistant à :
récupérer une chaîne de caractères à partir du symbole (104) de code à matrice ; et
convertir la chaîne de caractères en une table d'éléments de données représentant les données, décodant ainsi les données provenant du symbole (104) de code à matrice, la chaîne de caractères comportant au moins un élément de données de la table d'éléments de données, au moins un caractère spécial associé à chaque élément de données parmi l'élément ou les éléments de données, et un identifiant associé à chaque élément de données, la conversion de la chaîne comportant l'étape consistant à identifier au moins un identifiant à partir de la chaîne de caractères, l'identifiant ou les identifiants indiquant une position de ligne et de colonne d'un élément de données correspondant dans la table d'éléments de données, un élément de données de la table d'éléments de données comportant au moins un caractère, la table d'éléments de données comportant au moins une ligne d'éléments de données, une ligne d'éléments de données parmi la ou les lignes d'éléments de données comportant au moins un élément de données ; et au moins une colonne d'éléments de données, une colonne d'éléments de données parmi la ou les colonnes d'éléments de données comportant au moins un élément de données.

5. Procédé informatisé selon la revendication 4, le ou les caractères étant au moins un caractère parmi un caractère alphabétique, un chiffre, un caractère spécial et un caractère alphanumérique.

6. Procédé informatisé selon la revendication 4 ou 5, la conversion de la chaîne de caractères en la table d'éléments de données comportant en outre les étapes consistant à :
détecter le ou les caractères spéciaux à partir de la chaîne de caractères, un caractère spécial parmi le ou les caractères spéciaux indiquant le début d'un élément de données correspondant dans la chaîne de caractères ;
extraire au moins un élément de données de la chaîne de caractères ; et
générer la table d'éléments de données en utilisant l'élément ou les éléments de données extraits et un identifiant associé à chaque élément de données extrait, le ou les caractères spéciaux étant en particulier détectés au début de l'élément de données correspondant ou à la fin de la chaîne de caractères.

7. Codeur (102) destiné à coder des données dans un symbole (104) de code à matrice, le codeur (102) comportant :
une mémoire (702) servant à stocker une table d'éléments de données, un élément de données de la table d'éléments de données comportant au moins un caractère, la table d'éléments de données comportant au moins une ligne d'éléments de données, une ligne d'éléments de données parmi la ou les lignes d'éléments de données comportant au moins un élément de données ;
et au moins une colonne d'éléments de données, une colonne d'éléments de données parmi la ou les colonnes d'éléments de données comportant au moins un élément de données ; et
un processeur (704) couplé à la mémoire, le processeur (704) étant configuré pour : convertir la table d'éléments de données en une chaîne de caractères ; et
coder la chaîne de caractères dans le symbole (104) de code à matrice, extraire chaque élément de données de la table d'éléments de données pour obtenir un ensemble d'éléments de données extraits, ajouter à l'ensemble d'éléments de données extraits un identifiant associé à chaque élément de données extrait de l'ensemble d'éléments de données extraits, l'identifiant correspondant à une position de ligne et de colonne de chaque élément de données dans la table d'éléments de données ; et créer la chaîne de caractères à partir de l'ensemble d'éléments de données extraits.

8. Codeur (102) selon la revendication 7, le processeur (704) étant en outre configuré pour :
extraire chaque élément de données de la table d'éléments de données ligne par ligne ou colonne par colonne.

9. Codeur (102) selon la revendication 8, le processeur (704) étant en outre configuré pour :
ajouter à l'ensemble d'éléments de données extraits au moins un caractère spécial associé à chaque élément de données extrait de l'ensemble d'éléments de données extraits, créant ainsi la chaîne de caractères, le ou les caractères spéciaux indiquant le début de chaque élément de données extrait, le ou les caractères spéciaux étant en particulier ajoutés au début de chaque élément de données extrait ou à la fin du dernier élément de données extrait.

10. Codeur (102) selon l'une quelconque des revendications 7 à 9, la chaîne de caractères comportant chaque élément de données de la table d'éléments de données, au moins un caractère spécial associé à chaque élément de données, et un identifiant associé à chaque élément de données.

11. Décodeur (106) destiné à décoder des données à partir d'un symbole (104) de code à matrice, le décodeur (106) comportant : un processeur (804) configuré pour :
récupérer une chaîne de caractères à partir du symbole (104) de code à matrice ; et
convertir la chaîne de caractères en une table d'éléments de données représentant les données, la chaîne de caractères comportant au moins un élément de données de la table d'éléments de données, au moins un caractère spécial associé à chaque donnée, la conversion de la chaîne comportant l'étape consistant à identifier au moins un identifiant à partir de la chaîne de caractères, un identifiant parmi l'identifiant ou les identifiants indiquant une position de ligne et de colonne d'un élément de données correspondant dans la table d'éléments de données, un élément de données de la table d'éléments de données comportant au moins un caractère, la table d'éléments de données comportant au moins une ligne d'éléments de données, une ligne d'éléments de données parmi la ou les lignes d'éléments de données comportant au moins un élément de données ; et au moins une colonne d'éléments de données, une colonne d'éléments de données parmi la ou les colonnes d'éléments de données comportant au moins un élément de données ; et
stocker la chaîne de caractères et la table d'éléments de données.

12. Décodeur (106) selon la revendication 11, le processeur (804) étant en outre configuré pour :
détecter le ou les caractères spéciaux à partir de la chaîne de caractères, un caractère spécial parmi le ou les caractères spéciaux indiquant le début d'un élément de données correspondant dans la chaîne de caractères ;
extraire au moins un élément de données de la chaîne de caractères ; et
générer la table d'éléments de données en utilisant l'élément ou les éléments de données extraits et un identifiant associé à chaque élément de données extrait, le ou les caractères spéciaux étant en particulier détectés au début de l'élément de données correspondant ou à la fin de la chaîne de caractères.
